# EUROPEAN PATENT APPLICATION

(11) **EP 4 597 683 A1**
(43) Date of publication of application: **06.08.2025**
(21) Application number: 23891884.1
(22) Date of filing: 03.11.2023
(51) Int. Cl.: H01M 10/42, H01M 4/62, H01M 4/131, H01M 4/1391, H01M 10/052, H01M 4/02

(54) **ELECTRODE FOR LITHIUM SECONDARY BATTERY, AND LITHIUM SECONDARY BATTERY COMPRISING SAME**

(30) Priority: 14.11.2022 KR 20220151840
(71) Applicant: LG Energy Solution, Ltd., Seoul 07335 (KR); LG CHEM, LTD., Seoul 07336 (KR)
(72) Inventor: KWON, Soonho, Daejeon 34122 (KR); CHA, Myeonggeun, Daejeon 34122 (KR); PARK, Sungbin, Daejeon 34122 (KR); KIM, Mingyu, Daejeon 34122 (KR); CHO, Woohyung, Daejeon 34122 (KR); KIM, Ki Hwan, Daejeon 34122 (KR); KOH, Jongkwan, Daejeon 34122 (KR); PARK, Eun Kyoung, Daejeon 34122 (KR); KANG, Joon Koo, Daejeon 34122 (KR); SONG, Intaek, Daejeon 34122 (KR); YANG, Heemyeong, Daejeon 34122 (KR); CHOI, Hyunju, Daejeon 34122 (KR)
(74) Representative: Goddar, Heinz J.
(86) International application number: PCT/KR2023/017471
(87) International publication number: WO 2024/106817

(57) **Abstract**

The present disclosure relates to an electrode for a lithium secondary battery which not only effectively suppresses heat generation or ignition and thus has further improved stability, but also enables provision of batteries exhibiting excellent electrochemical characteristics, and a lithium secondary battery comprising the same.

## Description

### [TECHNICAL FIELD]

### Cross Citation with Related Application(s)

This application claims the benefit of Korean Patent Application No. 10-2022-0151840 filed on November 14, 2022 with the Korean Intellectual Property Office, the disclosure of which is hereby incorporated by reference in its entirety.

The present disclosure relates to an electrode for a lithium secondary battery which not only effectively suppresses heat generation or ignition and thus has further improved stability, but also enables provision of batteries exhibiting excellent electrochemical characteristics, and a lithium secondary battery comprising the same.

### [BACKGROUND]

As demand for medium- and large-sized devices such as electric vehicles and hybrid electric vehicles, and mobile devices such as smartphones and tablet PCs has increased significantly, demand for secondary batteries as an energy source needed to drive such devices is rapidly increasing. In particular, as the data processing speed and the usage time of the mobile devices increase, lithium secondary batteries, which have higher energy density and operating potential, can maintain excellent characteristics over a long period of time, and have a low self-discharge rate, are being actively developed.

However, as the capacity and energy density of lithium secondary batteries have increased significantly, many ignition and explosion accidents caused by overcharging, exposure to high temperatures, external impacts, etc. of various mobile devices or electric vehicles containing the same have been reported. Thus, recently, one of the major research tasks for lithium secondary batteries is to improve safety by suppressing ignition and explosion.

It is known that the direct cause of ignition, explosion, and the like in the lithium secondary batteries is a short circuit caused by direct contact between a positive electrode and a negative electrode inside the secondary battery due to stimuli applied from the outside, such as high temperatures and external impacts. For example, when a lithium secondary battery is overcharged, or exposed to high temperature or external impacts, the internal temperature of the secondary battery may rise rapidly, causing the separator to shrink, or the internal structure of the secondary battery may be destroyed due to external impacts. As a result, the positive electrode and the negative electrode may come into contact, so that a short circuit may occur. When such a short circuit occurs, the movement of lithium ions and electrons may be concentrated through the contact portion between the positive electrode and the negative electrode so that overcurrent can occur, which may cause heat generation, gas generation inside the battery, and volume expansion, and thus may pose a risk of ignition or explosion of the lithium secondary batteries.

Therefore, in order to suppress ignition and explosion during the short circuit and improve the safety of the secondary batteries, it is necessary to increase the resistance between the electrodes and interrupt the current when high temperatures or external impacts are applied. For this purpose, various attempts have been made to add various functional layers or functional materials to electrodes for lithium secondary batteries to increase resistance when high temperatures are applied, thereby improving the safety of secondary batteries.

However, in the case of electrodes to which previously known functional layers are added, there is a disadvantage that it is difficult to sufficiently enhance the safety of the lithium secondary battery and thus, the possibility of ignition and explosion still exists, or the functional layer partially inhibits electrochemical characteristics such as charge/discharge characteristics of the secondary battery.

### [DETAILED DESCRIPTION OF THE INVENTION]

### [Technical Problem]

Therefore, it is an object of the present disclosure to provide an electrode for a lithium secondary battery which not only effectively suppresses heat generation or ignition and thus has further improved stability, but also enables provision of batteries exhibiting excellent electrochemical characteristics.

It is another object of the present disclosure to provide a lithium secondary battery which comprises the electrode, and thus exhibits excellent stability and charge/discharge characteristics.

### [Technical Solution]

Provided herein an electrode for a lithium secondary battery, comprising a metal current collector; and an electrode active material and a conductive material, and comprising an active material layer formed on the metal current collector,
wherein the active material layer further comprises a conductive polymer that exhibits a single peak in the band of 1350 to 1600 cm⁻¹ during Raman spectrum analysis, and exhibits PTC (positive temperature coefficient) characteristics, and
wherein when a cross section of the active material layer is subjected to Raman image analysis, the conductive polymer is formed so as to cover 80% or more of the total area of the boundary surface where the metal current collector and the active material layer face each other.

Also provided herein is a lithium secondary battery comprising: a positive electrode, a negative electrode, and a separator interposed between them, with the electrode comprised as the positive electrode.

Now, an electrode for a lithium secondary battery, and a lithium secondary battery, etc. comprising the same according to specific embodiments of the present disclosure will be described.

Terms or words used in the present specification and claims should not be construed as limited to ordinary or dictionary terms, and the present disclosure should be construed with meanings and concepts that are consistent with the technical idea of the present disclosure based on the principle that the inventors can appropriately define concepts of the terms to appropriately describe their own invention in the best way.

The terms used herein are provided to describe the embodiments but not to limit the inventive concept. The singular forms include plural forms unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

According to one embodiment of the present disclosure, there is provided an electrode for a lithium secondary battery, comprising: a metal current collector; and an electrode active material and a conductive material, and comprising an active material layer formed on the metal current collector,
wherein the active material layer further comprises a conductive polymer that exhibits a single peak in the band of 1350 to 1600 cm⁻¹ during Raman spectrum analysis, and exhibits PTC (positive temperature coefficient) characteristics, and
wherein when a cross section of the active material layer is subjected to Raman image analysis, the conductive polymer is formed so as to cover 80% or more of the total area of the boundary surface where the metal current collector and the active material layer face each other.

The electrode of one embodiment includes a conductive polymer mainly distributed in the boundary surface between the metal current collector and the active material layer, wherein the conductive polymer may exhibit a single peak in the band of 1350 to 1600 cm⁻¹ or 1500 to 1600 cm⁻¹ during Raman spectrum analysis, and may exhibit a PTC (positive temperature coefficient) characteristics. At this time, the single peak has a peak intensity of at least 5 times higher than that of the peaks confirmed in other bands in the Raman spectrum analysis results, and the category of "single peak" may include the case where, in addition to the peak having the maximum intensity in the band of 1350 to 1600 cm⁻¹, fine peaks having a peak intensity of less than 5 times that of the same exist.

The characteristic peak appearing in the band of Raman spectra may define that the conductive polymer contains a high content of an aromatic ring with a conjugated π electron system among the repeating units, and for example, it may indicate that the conductive polymer has a repeating unit having an aromatic ring containing one or more or one or two hetero elements such as nitrogen or sulfur in a content of 50 mol% or more, or 70 mol% or more, or 90 to 100 mol% of the total repeating units.

As a lithium secondary battery is activated, a conductive polymer containing an aromatic ring having a conjugated π electron system may exhibit conductivity by doping anions derived from the electrolyte of the secondary battery onto the aromatic ring. Therefore, during the normal charge/discharge process of the secondary battery, the conductive polymer exhibits conductivity, which allows the secondary battery to exhibit excellent electrochemical characteristics such as appropriate charge/discharge characteristics.

However, the conductive polymer can be de-doped from the aromatic ring by anions derived from the electrolyte at temperatures above a certain level. As a result, the conductive polymer can act as a nonconductor, thereby increasing resistance and exhibiting PTC characteristics that interrupt the flow of current.

In particular, the electrode for a lithium secondary battery of one embodiment adjusts the properties such as the structure and solubility of the conductive polymer, the coating thickness and method, which will be described later, whereby such a conductive polymer can be concentratedly and uniformly distributed near the boundary surface between the metal current collector and the active material layer. As a result, the conductive polymer is formed so as to cover the surface of the active material layer over an area of 80% or more, or 80 to 100%, or 85 to 95% of the total area of the boundary surface where the metal current collector and the active material layer face each other.

As a result, in the electrode of one embodiment, the metal current collector is in contact with the electrode active material included in the active material layer only in a region corresponding to an area of less than 20%, 15% or less, or 5 to 15% of the total area of the metal current collector. In the remaining region except those mentioned above, the surface of the metal current collector is in contact with the conductive polymer covering the surface of the active material layer.

As the specific conductive polymer exhibiting the PTC characteristics is uniformly distributed in most regions to prevent direct contact between the metal current collector and the electrode active material in this way, the electrode of one embodiment can further improve the safety of the lithium secondary battery based on the following principle, and deterioration of electrochemical characteristics such as charge/discharge characteristics can be suppressed by the conductive polymer.

First, when an external stimulus such as overcharging, high temperature, or external impacts is applied to the lithium secondary battery including the electrode, and the temperature inside the battery rises rapidly, such a conductive polymer can be converted into a nonconductor due to the de-doping of anions or the like. Therefore, it is possible to significantly increase the resistance within the electrode and interrupt the flow of current to prevent overcurrent due to short circuit between electrodes, and to suppress heat generation, ignition, explosion, gas generation, etc. in secondary batteries. In particular, in the electrode of one embodiment, as the conductive polymer is concentratedly distributed near the boundary surface between the metal current collector and the electrode active material so as to prevent direct contact in most regions, the conductive polymer converted to a nonconductor upon application of external stimulus can very effectively interrupt a contact between the electrode active material and the metal current collector, thereby further improving the safety of lithium secondary batteries.

Moreover, as the conductive polymer does not spread into the active material layer, but is concentratedly distributed in the boundary surface between the metal current collector and the active material layer, such a conductive polymer does not interfere with the normal charge/discharge process of the secondary battery. In particular, during the normal charge/discharge process of a secondary battery, even if a part of the conductive polymer is converted into a nonconductor due to the application of local heat within the active material layer, this is spread uniformly around the boundary surface adjacent to the metal current collector, and thus does not interfere with the charge/discharge process and characteristics. As a result, a lithium secondary battery including the electrode of one embodiment can exhibit electrochemical characteristics such as charge/discharge characteristics at the same level or higher while exhibiting further improved safety.

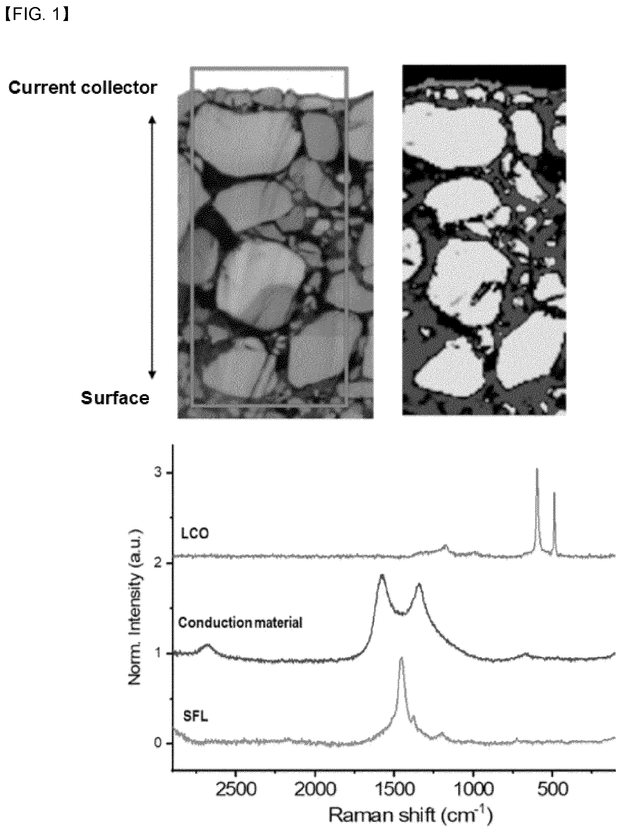

Meanwhile, the region and area where the conductive polymer is distributed can be confirmed and measured by performing Raman image analysis along the cross section of the active material layer and/or the boundary surface between the metal current collector and the active material layer (or the metal current collector surface). In a specific embodiment, as shown in FIG. 1, the respective components included in the active material layer, for example, the electrode active material, the conductive material, and the above-mentioned conductive polymer, exhibit different Raman spectra from each other. Therefore, in the results of Raman image analysis, each component distinguished by the Raman spectrum can be expressed as a different fluorescence.

From the results of this Raman image analysis, the region where the conductive polymer is distributed can be confirmed (e.g., the region shown in red in FIG. 1), and it is possible to confirm which components are distributed along the boundary surface. For example, when Raman image analysis was performed along the boundary surface where the metal current collector and the active material layer face each other, it can be judged that the characteristics of the electrode of one embodiment are satisfied if a single peak in the 1350 to 1600 cm⁻¹ band is confirmed in an area of more than 80% of the total area of the boundary surface, or the peak derived from the electrode active material(LCO) or conductive material shown in FIG. 1 is confirmed in a region of less than 20% of the total area of the boundary surface.

The conductive polymer included in the electrode of the above-mentioned embodiment exhibits the above-mentioned PTC characteristics, wherein the effective operating temperature at which such conductive polymers are converted into a nonconductor may be 70 to 130°C, or 80 to 125°C. As the conductive polymer is converted into a nonconductor at this effective operating temperature, the conductive polymer can more effectively suppress ignition or explosion of the secondary battery upon application of external stimulus, without inhibiting the normal charge/discharge process of the secondary battery.

The conductive polymer exhibiting the above-described effective operating temperature and distribution characteristics will be described in more detail below.

Further, the conductive polymer may be a polymer or copolymer containing a repeating unit having an aromatic ring containing one or more hetero elements, or one or two hetero elements in an amount of 50 mol% or more, or 70 mol% or more, or 90 to 100 mol% of the total repeating units, and more specifically, may be a polythiophene-based polymer or copolymer mainly containing a repeating unit containing a substituted or unsubstituted thiophene ring as the aromatic ring.

In a more specific embodiment, the conductive polymer may be a polythiophene-based polymer or copolymer in which an alkylene oxide group is bonded to a thiophene ring in the repeating unit, for example, a homopolymer or copolymer containing a repeating unit of the following Chemical Formula 1: 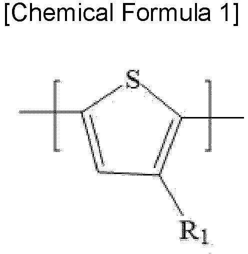 wherein, in Chemical Formula 1, R₁ is a functional group of the following Chemical Formula 2, 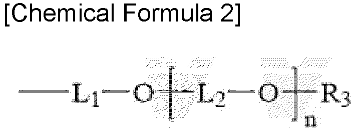 wherein, in Chemical Formula 2, L₁ is a single bond or an alkylene group, L₂ is an alkylene group, R₃ is hydrogen or an alkyl group, and n is an integer in the range of 1 to 5000, or 10 to 2000, or 50 to 1000, wherein the alkylene group may be an alkylene group having 2 to 5 carbon atoms, and the alkyl group may be an alkyl group having 1 to 5 carbon atoms.

Further, such a polythiophene-based (co)polymer may have a weight average molecular weight of, for example, 5000 to 100000 g/mol, or 10000 to 80000 g/mol.

In a more specific embodiment, the polythiophene-based (co)polymer may contain the repeating unit of Chemical Formula 1 in an amount of more than 0 mol%, or 0.001 mol% or more, or 0.01 mol% or more, or 1 mol% or more, and in an amount of 100 mol% or less, or 80 mol% or less, or 50 mol% or less, or 30 mol% or less. At this time, the polythiophene-based (co)polymer may include the remaining content of alkyl thiophene-based repeating units excluding the same, for example, an alkyl thiophene-based repeating unit in which a thiophene ring is substituted with an alkyl group having 1 to 20 carbon atoms or 3 to 15 carbon atoms.

Such a polythiophene-based (co)polymer includes the substituted thiophene ring and thus can exhibit an appropriate effective operating temperature, and the like. As a result, the (co)polymer not only does not impair the charge/discharge characteristics of the lithium secondary battery but also can be converted into a nonconductor when a high temperature above a certain level is applied, thereby improving the safety of the secondary battery.

Further, due to the above-mentioned predetermined structure, the polythiophene-based (co)polymer can exhibit relatively low affinity, solubility, and the like for organic solvents mainly contained in the slurry composition for forming the active material layer, for example, solvents such as N-methylpyrrolidone, and can also exhibit excellent adhesion to the metal current collector. Therefore, in the process of forming the conductive polymer of the polythiophene-based (co)polymer on a metal current collector to a thickness of a certain level or more, and then coating and drying the slurry composition to form an active material layer, the phenomenon in which the conductive polymer dissociates and spreads over a wide area of the active material layer can be minimized. Therefore, by using such a polythiophene-based (co)polymer, such conductive polymers may be concentratedly distributed near the boundary surface between the metal current collector and the adjacent active material layer. As a result, the conductive polymer can cover the surface of the active material layer in an area of 80% or more of the total area of the boundary surface (or metal current collector) to prevent direct contact between the metal current collector and the electrode active material. Therefore, such polythiophene-based (co)polymers can contribute to improving the safety of secondary batteries without impairing their electrochemical characteristics.

Meanwhile, the conductive polymer may be contained in an amount of 0.001 to 5 parts by weight, or 0.005 to 5 parts by weight, based on 100 parts by weight of the electrode active material (e.g., positive electrode active material) included in the active material layer. Thereby, the electrode of one embodiment may have more excellent safety and charge/discharge characteristics.

The conductive polymer having the repeating unit of the above-mentioned Chemical Formula 1, etc. can be prepared, for example, by subjecting a halogenated thiophene compound and an alkylene glycol compound to a substitution reaction to prepare a monomer to which the functional group of the Chemical Formula 2 is bonded, and then polymerizing such monomers alone or by copolymerizing them with other monomers such as alkylthiophene. Specific conditions for preparing such monomers and polymers are described in Preparation Examples described later.

Further, the conductive polymer may be formed on the metal current collector, for example, by coating a liquid composition dissolved or dispersed in an organic solvent such as tetrahydrofuran (THF), toluene, or xylene at a concentration of about 0.1 to 5 wt.% on the metal current collector to a thickness of 0.1 to 5 *µ*m, or 0.3 to 3 *µ*m, or 0.5 to 3 *µ*m and drying it. Thereafter, the slurry composition described below is coated and dried to form an active material layer, and the active material layer can be rolled to produce an electrode for a lithium secondary battery of one embodiment.

At this time, the liquid composition for forming the conductive polymer may further include one or more additives selected from the group consisting of a carbon-based conductive material, conductive inorganic particles, a binder, and an esterified saccharide in addition to the conductive polymer.

At this time, as the carbon-based conductive material and the binder, the same components as those included in the active material layer can be used, and by the addition of these components, the conductivity of the electrode of one embodiment, the adhesiveness or mechanical properties of the safety functional layer, etc. can be further improved. Further, as the conductive inorganic particles, alumina or zirconia particles having a nanoscale particle size, for example, 5 to 100 nm, can be used, and by the addition of these, the conductivity of the electrode and secondary battery can be further improved. Moreover, a monosaccharide, oligosaccharide, or polysaccharide having an acyl group can be used as the esterified saccharide. This component generates gas when the secondary battery is overcharged, and can play the role of blocking the conductive path between the metal current collector and the electrode active material, and by the addition of this component, the safety of the secondary battery can be further improved.

On the other hand, the electrode of one embodiment further includes an active material layer formed on a metal current collector in the conductive polymer-forming region, wherein the active material layer may include an electrode active material, a conductive material, and optionally a binder. At this time, since it is preferable that the electrode on which the conductive polymer is formed is a positive electrode, such examples will be mainly described.

In the positive electrode for a lithium secondary battery, the metal current collector may generally have a thickness of 3 to 500 *µ*m, and may be formed of any metal or alloy that has excellent conductivity without causing chemical changes in the secondary battery. Examples of such metal current collectors include metal current collectors such as stainless steel, aluminum, copper, nickel, or titanium, or aluminum or stainless steel whose surface is treated with carbon, nickel, titanium, or silver, and the like. Further, the metal current collector can form fine protrusions and depressions on the surface thereof to enhance the adhesion of the safety functional layer, etc., and can be used in various forms such as a film, a sheet, a foil, a net, a porous body, a foaming body, and a non-woven fabric structure.

In addition, the positive electrode active material included in the active material layer is not particularly limited as long as it is a material capable of reversibly intercalating and de-intercalating lithium ions, and examples thereof include a lithium metal composite oxide containing at least one metal element selected from the group consisting of Co, Mn, Ni, W, Cu, Fe, V, Cr, Ti, Zr, Zn, Al, In, Ta, Y, La, Sr, Ga, Sc, Gd, Sm, Ca, Ce, Nb, Mg and Mo.

More specifically, a compound represented by any one of the following formulas can be used as the positive electrode active material. LiₐA_{1-b}R_{b}D₂(wherein, 0.90 ≤ a ≤ 1.8 and 0 ≤ b ≤ 0.5); LiₐE_{1-b}R_{b}O_{2-c}D_{c}(wherein, 0.90 ≤ a ≤ 1.8, 0 ≤ b ≤ 0.5, and 0 ≤ c ≤ 0.05); LiE_{2-b}R_{b}O_{4-c}D_{c}(wherein, 0 ≤ b ≤ 0.5, 0 ≤ c ≤ 0.05); LiₐNi_{1-b-c}Co_{b}R_{c}D_{α}(wherein, 0.90 ≤ a ≤ 1.8, 0 ≤ b ≤ 0.5, 0 ≤ c ≤ 0.05 and 0 < α ≤ 2); LiₐNi_{1-5-c}CoₚR_{c}O_{2-α}Z_{α}(wherein, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂(wherein, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α}(wherein, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α}(wherein, 0.90 ≤ a ≤ 1.8, 0 ≤ b ≤ 0.5, 0 ≤ c ≤ 0.05 and 0 < α < 2); LiₐNi_{1-b-c}MnₚR_{c}O_{2-α}Z₂(wherein, 0.90 ≤ a ≤ 1.8, 0 ≤ b ≤ 0.5, 0 ≤ c ≤ 0.05 and 0 < α < 2); LiₐNi_{b}E_{c}G_{d}O₂(wherein, 0.90 ≤ a ≤ 1.8, 0 ≤ b ≤ 0.9, 0 ≤ c ≤ 0.5 and 0.001 ≤ d ≤ 0.1.); LiₐNi_{b}Co_{c}Mn_{d}GeO₂(wherein, 0.90 ≤ a ≤ 1.8, 0 ≤ b ≤ 0.9, 0 ≤ c ≤ 0.5, 0 ≤ d ≤0.5 and 0.001 ≤ e ≤ 0.1.); LiₐNiG_{b}O₂(wherein, 0.90 ≤ a ≤ 1.8 and 0.001 ≤ b ≤ 0.1.); LiₐCoG_{b}O₂(wherein, 0.90 ≤ a ≤ 1.8 and 0.001 ≤ b ≤ 0.1.); LiₐMnG_{b}O₂(wherein, 0.90 ≤ a ≤ 1.8 and 0.001 ≤ b ≤ 0.1.); LiₐMn₂G_{b}O₄(wherein, 0.90 ≤ a ≤ 1.8 and 0.001 ≤ b ≤ 0.1.); QO₂; QS₂; LiQS₂; V₂O₅; LiV₂O₅; LiTO₂; LiNiVO₄; and Li_{(3-f)}J₂(PO₄)₃(0 ≤ f ≤ 2).

In the above formulas, A is Ni, Co, Mn or a combination thereof; R is Al, Ni, Co, Mn, Cr, Fe, Mg, V, or a combination thereof; D is O, F, S, P or a combination thereof; E is Co, Mn or a combination thereof; Z is F, S, P or a combination thereof; G is Al, Cr, Mn, Fe, Mg, La, Ce, V or a combination thereof; Q is Ti, Mo, Mn or a combination thereof; T is Cr, V, Fe, Sc, Y or a combination thereof; and J is V, Cr, Mn, Co, Ni, Cu or a combination thereof.

Further, those having a coating layer on the surface of the above compound can be used, or a mixture of the above compound and a compound having a coating layer can be used. The coating layer may include, as the coating element compound, an oxide of the coating element, a hydroxide of the coating element, an oxyhydroxide of the coating element, an oxycarbonate of the coating element, and a hydroxycarbonate of the coating element. The compounds constituting these coating layers may be amorphous or crystalline compounds. As the coating element included in the coating layer, Mg, Al, Co, K, Na, Ca, Si, Ti, V, Sn, Ge, Ga, B, As, Zr, or a mixture thereof can be used.

Further, the conductive material used in the active layer is used to impart conductivity to the electrode, and the conductive material can be used without limitation as long as it has electronic conductivity without causing chemical changes in the battery to be configured. Specific examples thereof include natural graphite, artificial graphite, carbon black, carbon fiber, carbon nanotubes, metal powder such as copper, nickel, aluminum and silver, metal fibers, and the like. Further, conductive materials such as polyphenylene derivatives can be used alone or in a mixture of one of more thereof.

The conductive material may be added in an amount of 1 to 50 wt.%, or 2 to 20 wt.%, based on the total weight of the active material layer. Thereby, it is possible to ensure preferable formation of the positive electrode while imparting excellent electrical characteristics to the positive electrode.

The binder plays a role in making the particles of the positive electrode active material adhere well to each other and further improving the binding properties of the active material layer. As a typical example thereof, the above-mentioned halogenated polyolefin-based polymer binder, polyvinylalcohol, carboxymethylcellulose, hydroxypropylcellulose, diacetylcellulose, polyvinylchloride, carboxylated polyvinylchloride, ethylene oxide-containing polymers, polyvinylpyrrolidone, polyurethane, polyethylene, polypropylene, styrene-butadiene rubbers, acrylated styrene-butadiene rubbers, epoxy resins, nylon, and the like can be used.

The binder may be added in an amount of 1 to 50 wt.%, or 2 to 30 wt.% based on the total weight of the active material layer. Thereby, it is possible to form a positive electrode with excellent durability without impairing the electrical characteristics and/or capacity characteristics of the positive electrode.

The above-mentioned active material layer can be formed by dissolving or dispersing each component such as the positive electrode active material, conductive material, and binder in a medium such as an organic solvent to form a slurry composition, and then coating, drying, and rolling the slurry composition on a metal current collector on which the safety functional layer is formed.

At this time, examples of media such as the organic solvent include N-methyl-2-pyrrolidone (NMP), methoxy propyl acetate, butyl acetate, glycol acid, butyl ester, butyl glycol, methylalkylpolysiloxane, alkylbenzene, propylene glycol, xylene, monophenyl glycol, or the like, among which NMP, etc. can be appropriately used considering the dispersibility and processablity of the above-mentioned positive electrode active material and conductive material.

In this manner, the conductive polymer-containing region and the active material layer are formed through separate compositions and processes, while a polymer having low solubility and affinity to the NMP, for example, a polymer having a repeating unit of Chemical Formula 1, is used as the conductive polymer, and the coating thickness of the conductive polymer, etc., is controlled, whereby the conductive polymer can be concentratedly and uniformly distributed near the boundary surface between the metal current collector and the active material layer. As a result, a lithium secondary battery including the electrode of one embodiment can exhibit further improved safety and excellent charge/discharge characteristics.

Meanwhile, since the formation process and conditions of the active material layer excluding the formation process of the conductive polymer may follow the general positive electrode formation process and conditions, further description thereof will be omitted.

The active material layer formed by the above-mentioned method may have a thickness of 5 to 300 *µ*m, or 10 to 200 *µ*m, and in the region where the conductive polymer covers the boundary surface between the metal current collector and the active material layer, the conductive polymer can have a thickness of 0.1 to 3 *µ*m, or 0.2 to 2.5 *µ*m. Depending on the above thickness range, when an external stimulus such as an external impact is applied, the conductive polymer more effectively suppresses direct contact between the active material and the metal current collector, thereby ensuring improved safety of the secondary battery. Further, it is possible to minimize the inhibition of the electrochemical characteristics of the secondary battery due to the conductive polymer distribution region being formed too thickly.

Meanwhile, according to the other embodiment of the present disclosure, there is provided a lithium secondary battery comprising the electrode of one embodiment as a positive electrode and simultaneously comprising a positive electrode, a negative electrode, and a separator interposed between them.

In such a lithium secondary battery of the other embodiment, the negative electrode is produced by coating, drying, and rolling a negative electrode active material on a negative electrode current collector, and may further include a conductive material and a binder as necessary.

The negative electrode active material may include, for example, graphite having a complete layered crystal structure such as natural graphite, soft carbon having a low-crystalline layered crystal structure (graphene structure in which hexagonal honeycomb shaped planes of carbon are arrayed in the form of a layer), hard carbon having a structure in which the low-crystalline structures are mixed with non-crystalline parts, carbon and graphite materials such as artificial graphite, expanded graphite, carbon fiber, hardly graphitizable carbon, carbon black, carbon nanotubes, fullerene, activated carbon; or metal composite oxides such as LiₓFe₂O₃(0≤x≤1), LiₓWO₂(0≤x≤1), SnₓMe₁₋ₓMe'_{y}O₂ (Me: Mn, Fe, Pb, Ge; Me': Al, B, P, Si, Group 1, 2, 3 elements in the periodic table, halogen; 0<x≤1; 1≤y≤3; 1≤z≤8); lithium metal; lithium alloys; silicon, silicon oxide or silicon-based alloys; tin-based alloys; a conductive polymer such as polyacetylene; Li-Co-Ni based materials; titanium oxide; or lithium titanium oxide, etc.

In one embodiment, the negative electrode active material may include both graphite and silicon (Si)-containing particles, the graphite may include at least one of natural graphite with a layered crystal structure and artificial graphite with an isotropic structure, and the silicon (Si)-containing particles are particles containing as a main component silicon (Si) as a metal component, and may include silicon (Si) particles, silicon oxide particles, or a mixture of the silicon (Si) particles and silicon oxide particles.

In addition, the conductive material and binder that can be used together with the negative electrode active material may be the same components as the conductive material and binder included in the positive electrode active material layer.

Further, the negative electrode active material layer containing the negative electrode active material may have a thickness of 100 *µ*m to 200 *µ*m, or 120 *µ*m to 200 *µ*m.

Furthermore, the negative electrode current collector is not particularly limited as long as it has high conductivity without causing chemical changes in the battery. For example, copper, stainless steel, nickel, titanium, fired carbon, etc. can be used, and in the case of copper or stainless steel, materials surface-treated with carbon, nickel, titanium, silver, etc. may be used.

In addition, similar to the positive electrode current collector, the negative electrode current collector may have fine protrusions and depressions formed on a surface thereof to enhance adherence of a negative electrode active material layer, and may be formed in various forms such as a film, a sheet, a foil, a net, a porous body, a foaming body, and a non-woven fabric structure. Moreover, the average thickness of the negative electrode current collector can be appropriately applied in the range of 3~100 *µ*m in consideration of the conductivity and total thickness of the negative electrode to be produced.

Further, the separator is interposed between the positive electrode and the negative electrode, and a thin insulating film having high ion permeability and mechanical strength is used. The separator is not particularly limited as long as it is commonly used in this field. Specifically, chemically resistant and hydrophobic polypropylene; glass fiber; or sheets or non-woven fabrics made of polyethylene, etc. can be used. In some cases, a composite separator can be used in which inorganic particles/organic particles are coated by an organic binder polymer onto a porous polymer substrate such as a sheet or non-woven fabric. When a solid electrolyte such as a polymer is used as the electrolyte, the solid electrolyte can also serve as a separator. In addition, the separator may have an average pore diameter of 0.01 ~ 10 *µ*m, and an average thickness of 5 ~ 300 *µ*m.

The above-mentioned lithium secondary battery may further include an electrolyte, wherein such an electrolyte may be an electrolyte containing a nonaqueous organic solvent and a lithium salt, or an electrolyte membrane containing an organic or inorganic solid electrolyte, and these may be mixed and used together. However, the types of electrolytes that can be used are well known to those skilled in the art, and are not particularly limited in batteries of other embodiments, and thus, further description thereof will be omitted.

### [Advantageous Effects]

As described above, in the lithium secondary battery including the electrode of the present disclosure, even if an external stimulus such as overcharging, high temperature, or external impacts is applied and the temperature inside the battery rises rapidly, it is possible to effectively interrupt overcurrent by the conductive polymers concentratedly distributed near the metal current collector, thereby minimizing ignition and explosion.

Thereby, the lithium secondary battery can exhibit improved safety, and the deterioration of charge/discharge characteristics due to the conductive polymer can be suppressed, thereby exhibiting excellent electrochemical characteristics.

### [BRIEF DESCRIPTION OF THE DRAWINGS]

FIG. 1 shows the results of Raman image analysis of the active material layer of the electrode for a lithium secondary battery produced in Example 1, wherein the right diagram of FIG. 1 shows the results of Raman spectrum analysis of the conductive polymer prepared in Preparation Example;
FIGS. 2a to 2c show the results of a nail penetration test for five lithium secondary batteries produced in Example 1 (FIG. 2a), Comparative Example 1 (FIG. 2b), and Comparative Example 2 (FIG. 2c), respectively.

### [DETAILED DESCRIPTION OF THE EMBODIMENTS]

Hereinafter, various embodiments of the present disclosure will be described in detail so that those skilled in the art can easily carry out them. However, the present disclosure may be modified in various different ways, and is not limited to the embodiments set forth herein.

### Preparation example: Synthesis of monomer and conductive polymer

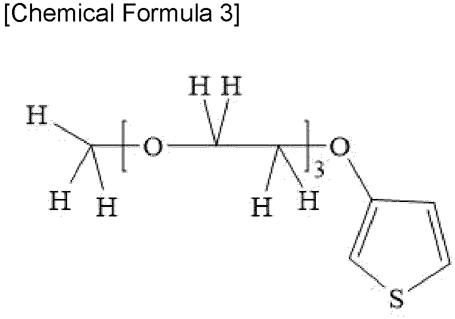

After creating the inside of the 3-way RBF (Round Bottom Flask) into a nitrogen environment through nitrogen flowing, 2.34 g (0.01 mol) of copper(I) iodide and 50.36 g (0.31 mol) of triethylene glycol were added. 3.68 g (0.096 mol) of sodium hydride 60% in mineral oil was slowly added to the RBF, and the mixture was stirred while maintaining a nitrogen environment. After stirring for about 1 hour, 10.0 g (0.06 mol) of 3-bromothiophene was added, and the mixture was refluxed at about 100°C for about 24 hours. The reaction solution was filtered through a pressure reducing device, and then washed with 100 mL of dichloromethane solution, and then washed with NH₄Cl and brine in that order. The solvent was removed through reduced pressure distillation, and the crude product was purified by column chromatography (hexane:ethyl acetate=60:40) to obtain about 9.0 g (yield: 60%) of the target compound (monomer compound of Chemical Formula 3).

124 g (767 mmol) of iron(III) chloride was dissolved in 1000 ml of methylene chloride, and 3.0 g (12.2 mmol) of the monomer compound of Chemical Formula 3 and 47.8 g (243 mmol) of 3-octyl thiophene were added to the solution, and the mixture was subjected to a polymerization reaction with stirring at about 25°C for 24 hours. The reaction solution was placed in an osmosis membrane with a MWCO (molecular weight of cut-off) of 5000, and then immersed in 1500 ml of acetonitrile solvent to remove unreacted iron(III) chloride, monomers, and the like. The residue precipitated inside the osmosis membrane was washed with methanol, and dried at about 25°C to obtain the desired conductive polymer. The weight average molecular weight (Mw) of the conductive polymer was confirmed to be about 37,000 g/mol.

### Example 1: Production of positive electrode and lithium secondary battery

### (Production of positive electrode)

20g of the conductive polymer (Mw=37,000g/mol) obtained in Preparation Example was dissolved in 1,980g of chloroform solvent to obtain a composition. This composition was gravure- coated and dried on an aluminum (Al) thin film, which is a positive electrode current collector, to thereby form a conductive polymer-containing layer with a thickness of about 0.5 *µ*m.

LiCoO₂ as a positive electrode active material, a conductive material (carbon black), and a binder (polyvinylidene fluoride) were added to N-methyl-2-pyrrolidone (NMP) at a weight ratio of 97.5:1:1.5 to prepare a positive electrode slurry (solids content: 60 wt.%) (however, the weight of the conductive polymer was about 0.5 parts by weight based on a total of 100 parts by weight of the positive electrode active material, the conductive material and the binder). This slurry was coated onto the conductive polymer-containing layer, dried and then roll-pressed to form an active material layer with a total thickness of 58 *µ*m, thereby producing a positive electrode.

### (Production of negative electrode)

A negative electrode active material (graphite), a binder (SBR-CMC), and a conductive material (carbon black) were added to water as a solvent at a weight ratio of 95:3.5:1.5 to prepare a negative electrode slurry (solids content: 60 wt.%). The negative electrode slurry was coated onto a copper (Cu) thin film as a negative electrode current collector having a thickness of 8 *µ*m, dried and then roll-pressed to produce a negative electrode.

### (Production of separator)

About 8.5 wt.% of polyvinylidene fluoride-hexafluoropropylene copolymer (PVdF-HFP) binder was added to acetone, and then dissolved at a temperature of 50°C for about 12 hours or more to prepare a binder solution. Al₂O₃ powder was added to this binder solution so that Al₂O₃/PVdF-HFP = 90/10 (wt.% ratio), and a slurry was prepared using a ball mill method for 12 hours or more. The slurry prepared in this way was coated onto a polyolefin-based separator with a thickness of about 8 *µ*m using a dip coating method. The coating thickness was adjusted to about 4.5 *µ*m to produce a porous separator.

### (Production of lithium secondary battery)

The positive electrode, the separator, and the negative electrode were sequentially stacked and then pressed using heat and pressure of 90°C and 200kPa to produce an electrode assembly composed of bicells. The assembled electrode assembly was housed in a pouch-type battery case, and ethylene carbonate(EC) and ethylmethyl carbonate (EMC) were mixed at a volume ratio of 30:70, and then an electrolyte in which LiPF₆ was dissolved to be 1.0M was injected, thereby producing a lithium secondary battery.

### Comparative Example 1

A positive electrode and a lithium secondary battery of Comparative Example 1 were produced in the same manner as in Example 1, except that the conductive polymer was not used (the conductive polymer-containing layer was not formed).

### Comparative Example 2

20g of the conductive polymer (Mw=37,000g/mol) obtained in Preparation Example was dissolved in 1,980g of chloroform solvent to obtain a composition. This composition was gravure-coated and dried onto an aluminum (Al) thin film, which is a positive electrode current collector. Thereby, a conductive polymer-containing layer with a thickness of about 0.05 *µ*m was formed.

The subsequent process was carried out in the same manner as in Example 1 to produce the positive electrode and lithium secondary battery of Comparative Example 2.

### Test Example

### Raman spectrum analysis and Raman image analysis

Regarding the positive electrode produced in Examples and Comparative Examples, a cross section from the positive electrode surface to the current collector was secured, and a Raman image of the cross-section was measured (device name: DXR3xi, Thermofisher Scientific, USA) to analyze the Raman spectrum and distribution of the conductive polymer. As shown on the right diagram of FIG. 1, the peaks on the Raman spectrum of the positive electrode produced in Examples are broadly divided into three parts. Among them, the Raman signal (peak center) of the conductive polymer is confirmed in the band of 1350 to 1600 cm⁻¹ (specifically, 1350 to 1500 cm⁻¹), wherein the corresponding Raman signal appears due to vibrational modes originating from the aromatic rings of the conducting polymer. Based on this, the area of the 1350∼1500 cm⁻¹ region on the Raman image was calculated, and the red region (conductive polymer) on the left diagram of FIG. 1 was calculated. In Raman image analysis, the thickness of the positive electrode cross section was used as the reference size for longitudinal mapping, and Raman images were measured under the following conditions.

* **Analysis conditions:** excitation laser wavelength 532 nm, laser power 0.8 mW, detector exposure time (exposure time per unit analysis area) 0.15 sec, grating 1200grooves/mm, pixel resolution 1 cm⁻¹, mapping size 30 *µ*m x 65 *µ*m, mapping pixel size 0.6 *µ*m x 0.6 *µ*m

In the measured Raman image, in order to calculate the area ratio where the positive electrode active material is in contact with the metal current collector from the measured Raman image, the area of the portion where the Raman signal of the conductive polymer and the Raman signal of the positive electrode active material (specifically, two peak signals confirmed between 450 and 650 cm⁻¹) appear simultaneously on one spectrum is calculated separately, apart from the area of the region where the conductive polymer signal was confirmed. Then, the contact area ratio was calculated by dividing the corresponding area value by the area of the region where the conductive polymer signal was confirmed, and is shown in Table 1 below.

### Measurement of interfacial resistance between active material layer and metal current collector

The interface resistance between the metal current collector and the active material layer (or conductive polymer forming layer) in the positive electrodes produced in Examples and Comparative Examples was measured using a multi probe tester, and is shown in Table 1 below.

### Nail penetration test

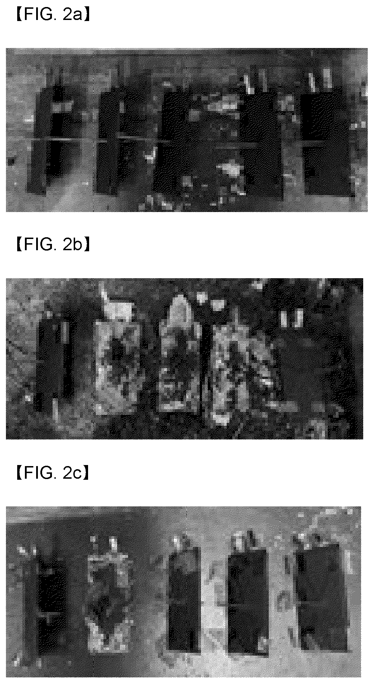

Five lithium secondary batteries produced in Examples and Comparative Examples were prepared, respectively, and fully charged to 100% SOC at 4.47V (0.05C cut off) under the conditions of CC/CV and 0.5C at 25°C, and then stored at room temperature for 24 hours. Each lithium secondary battery was placed on a flat plate, and a stainless steel nail with a diameter of 3 ± 0.2mm and a length of 70mm was penetrated into the center of the cell under the conditions of a displacement of 30mm, a vertical angle, and a penetration speed of 100mm/sec to measure the existence of ignition. Table 1 below lists the number of batteries that did not ignite among the five batteries. FIGS. 2a to 2c show photographs of each battery set after the above nail penetration test.

**[Table 1]**

| | Active material-current collector contact area ratio [Raman (LCO, Conducting Material peak)/ Raman (SFL peak)] | Area ratio (%) of the conductive polymer formation region among the total boundary surface area of the metal current collector and active material layer (%) | Interface resistance (ohm*cm²) | Nail penetration test (number of non-ignitions/total number) |
|---|---|---|---|---|
| Example 1 | 0.051 | About 95.15% | 0.73 | 5/5 |
| Comparative Example 1 | ∞ | 0% | 0.23 | 2/5 |
| Comparative Example 2 | 1 | About 50% | 0.35 | 3/5 |

| | | | | |
|---|---|---|---|---|
| * In the case of Comparative Example 1, as the area of the region where the conductive polymer signal was confirmed was 0, the contact area ratio was calculated as infinity (∞). | | | | |

Referring to Table 1, it was confirmed that in the lithium secondary battery of Example 1, a conductive polymer is formed on 80% or more, or 90% or more of the total area of the boundary surface between the metal current collector and the active material layer, and thus, the contact area ratio between the active material and the metal current collector is low. In contrast, it was confirmed that in Comparative Example 1, no separate conductive polymer is formed, and thus, all active materials are in contact with the metal current collector, and that even in Comparative Example 2, the active material is in contact with the metal current collector at a considerably wide boundary surface. Therefore, it was confirmed that Example 1 did not ignite despite a large external impact, and thus exhibits excellent safety compared to Comparative Examples 1 and 2.

## Claims

1. An electrode for a lithium secondary battery, comprising:
a metal current collector; and
an electrode active material and a conductive material, and comprising an active material layer formed on the metal current collector,
wherein the active material layer further comprises a conductive polymer that exhibits a single peak in the band of 1350 to 1600 cm⁻¹ during Raman spectrum analysis, and exhibits PTC (positive temperature coefficient) characteristics, and
wherein when a cross section of the active material layer is subjected to Raman image analysis, the conductive polymer is formed so as to cover 80% or more of the total area of the boundary surface where the metal current collector and the active material layer face each other.

2. The electrode for a lithium secondary battery according to claim 1, wherein the electrode active material included in the active material layer is in contact with the metal current collector in a region of less than 20% of the total area of the metal current collector.

3. The electrode for a lithium secondary battery according to claim 1, wherein when the Raman image analysis is performed along the boundary surface where the metal current collector and the active material layer face each other, a single peak in the band of 1350 to 1600 cm⁻¹ is confirmed over more than 80% of the total area of the boundary surface.

4. The electrode for a lithium secondary battery according to claim 1, wherein the effective operating temperature of the conductive polymer exhibiting the PTC characteristics is 70 to 130°C.

5. The electrode for a lithium secondary battery according to claim 1, wherein the conductive polymer includes a repeating unit containing an aromatic ring with a conjugated π electron system.

6. The electrode for a lithium secondary battery according to claim 4, wherein the conductive polymer includes a polythiophene-based polymer or copolymer.

7. The electrode for a lithium secondary battery according to claim 4, wherein the conductive polymer includes a homopolymer or copolymer containing a repeating unit of the following Chemical Formula 1: 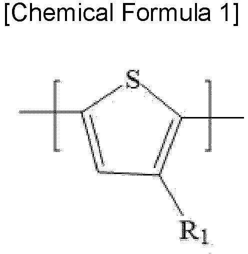 wherein, in Chemical Formula 1, R₁ is a functional group of the following Chemical Formula 2, 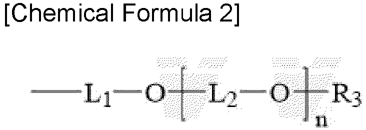 wherein, in Chemical Formula 2, L₁ is a single bond or an alkylene group, L₂ is an alkylene group, R₃ is hydrogen or an alkyl group, and n is an integer in the range of 1 to 5000.

8. The electrode for a lithium secondary battery according to claim 6, wherein the conductive polymer has a weight average molecular weight of 5000 to 100000 g/mol.

9. The electrode for a lithium secondary battery according to claim 1, wherein the active material layer has a thickness of 5 to 300 *µ*m, and the conductive polymer covers the boundary surface between the metal current collector and the active material layer with a thickness of 0.1 to 3 *µ*m.

10. The electrode for a lithium secondary battery according to claim 1, further comprising one or more additives selected from the group consisting of carbon-based conductive materials, conductive inorganic particles, binders, and esterified saccharides, within the region where the conductive polymer covers the boundary surface between the metal current collector and the active material layer.

11. The electrode for a lithium secondary battery according to claim 1, wherein the electrode is a positive electrode.

12. A lithium secondary battery comprising a positive electrode, a negative electrode, and a separator interposed between them, with the electrode of claim 1 comprised as the positive electrode.
